# DEMANDE DE BREVET EUROPEEN

(11) **EP 1 879 368 A1**
(43) Date de publication de la demande: **16.01.2008**
(21) Numéro de dépôt: 07112423.4
(22) Date de dépôt: 13.07.2007
(51) Int. Cl.: H04M 3/22, H04M 7/00

(54) **Enregistrement de communications dans un réseau de télécommunications**

(30) Priorité: 13.07.2006 FR 0606430
(71) Demandeur: AASTRA MATRA TELECOM, 78280 Guyancourt (FR)
(72) Inventeur: Mercuriali, Jean-Pierre, 91400, ORSAY (FR)
(74) Mandataire: Cabinet Plasseraud

(57) **Abrégé**

Pour enregistrer une communication entre un terminal appelant et un terminal appelé dans un réseau de télécommunications, au niveau d'un serveur d'appels (12) auquel est relié un dispositif d'enregistrement (16), on reçoit une requête (301, 602) d'établissement indiquant un profil de communication du terminal appelant et un identifiant du terminal appelé. On transmet au dispositif un message de déclenchement (303, 603) indiquant le profil de communication du terminal appelant. On transmet ensuite au terminal appelé, une requête d'établissement (306, 607) indiquant un profil de communication du dispositif. On reçoit depuis le terminal appelé une réponse d'établissement (309, 608) indiquant un profil de communication du terminal appelé. On transmet alors à destination du dispositif un message de mise à jour (311, 611) indiquant le profil de communication du terminal appelé, et au terminal appelant, une réponse (314, 609) indiquant un profil de communication du dispositif.
Le dispositif peut ainsi mémoriser des données reçues depuis le terminal appelant et/ou des données reçues depuis le terminal appelé.

## Description

La présente invention se rapporte à l'enregistrement des communications dans un réseau de télécommunications, plus précisément dans un réseau de télécommunications basé sur un protocole de transmission de données en mode paquets comme IP (de l'anglais `Internet Protocol').

Dans un réseau de téléphonie sur IP, la signalisation relative à une communication est gérée par un serveur d'appels IP, appelé un IP PBX (pour 'Private Branch Exchange'), alors que la transmission des données utiles (données de la voix) suit une voie différente qui ne passe pas par ce type de serveur d'appels IP.

Une telle gestion est différente de celle mise en oeuvre dans un réseau de téléphonie classique (non IP). En effet, dans ce dernier cas, pour un terminal géré par un autocommutateur PBX classique, la transmission de la signalisation et celle de la voix d'une même communication passent par cet autocommutateur PBX.

Cette différence implique que les solutions connues qui sont mises en oeuvre pour l'enregistrement des communications dans un réseau de téléphonie classique ne peuvent pas facilement être transposées dans un réseau de télécommunications de type IP.

En effet, dans un réseau de téléphonie classique, on peut par exemple prévoir d'enregistrer une communication impliquant un terminal donné en reliant à ce terminal un dispositif d'enregistrement via la liaison MIC (pour 'Modulation par Impulsions et Codage') utilisée pour cette communication. Puis, à partir des numéros de téléphone du terminal appelant et du terminal appelé qui sont inclus dans la signalisation des différentes communications qui passent par cette liaison MIC, on peut sélectionner les communications qui correspondent au terminal concerné par l'enregistrement, c'est-à-dire soit le terminal appelant soit le terminal appelé.

L'exposé de solutions techniques qui est donné ci-dessous résulte de la propre réflexion des inventeurs, et ne constituent aucunement l'admission d'un art antérieur connu.

Dans le but de transposer aux réseaux de télécommunications IP la méthode appliquée dans la téléphonie classique, on pourrait prévoir de réaliser un enregistrement des communications au niveau du serveur d'appels IP.

Un tel procédé serait complexe à mettre en oeuvre puisque, dans ce type de réseau, il est difficile, pour les raisons énoncées ci-dessus, de faire correspondre la signalisation et les données transmises, et de ce fait il est difficile d'identifier les données relatives au terminal concerné par l'enregistrement. En outre, dans un réseau de télécommunications présentant une taille importante, une telle méthode nécessiterait de prévoir la possibilité de réaliser des enregistrements au niveau d'un nombre important de serveurs d'appels IP.

On pourrait également prévoir d'installer un déclenchement automatique d'un appel vers un enregistreur depuis le terminal concerné par l'enregistrement. Un tel déclenchement automatique est possible sur un terminal présentant des première et seconde 'pattes' de liaisons ('legs' en anglais). Ce déclenchement d'appel automatique consisterait par exemple à effectuer un appel sur la seconde patte du terminal concerné, lorsque la première patte de ce terminal est utilisée soit pour recevoir un appel soit encore pour initier un appel. Une telle solution présenterait toutefois l'inconvénient d'utiliser la seconde patte des terminaux et de ce fait d'empêcher d'utiliser les fonctionnalités qui reposent sur cette seconde patte, comme les fonctionnalités de transfert d'appel, de double appel, ou encore de conférence.

En outre, en procédant ainsi, l'enregistrement d'une communication ne serait déclenché qu'après que la première patte du terminal considéré ait été sollicitée, en recevant un appel ou en initiant un appel. Par conséquent, l'enregistrement de la communication ne pourrait effectivement être réalisé qu'après le début de la communication. Dans de telles conditions, il est probable que certaines informations ne seraient pas enregistrées.

De plus, comme le déclenchement automatique de l'appel vers le dispositif d'enregistrement serait réalisé après que la communication ait été établie, il en résulterait, dans le cas d'une communication voix, que l'utilisateur du terminal concerné pourrait être gêné par un bruit généré par cet appel vers le dispositif d'enregistrement.

La présente invention vise à permettre l'enregistrement des communications dans un réseau de télécommunications basé sur un protocole de transmission de données en mode paquets, sans encourir les inconvénients des solutions précédemment citées.

Un premier aspect de la présente invention propose un procédé d'enregistrement de communication pour un terminal déterminé, au cours d'une communication entre un terminal appelant et un terminal appelé dans un réseau de télécommunications, ledit terminal déterminé, correspondant au terminal appelant ou au terminal appelé, étant géré par un serveur d'appels relié à au moins un dispositif d'enregistrement.

Le procédé comprend les étapes suivantes, mises en oeuvre au niveau du serveur d'appels :
/a/ recevoir une requête d'établissement de communication indiquant un premier profil de communication d'appelant correspondant au terminal appelant et un identifiant d'appelé correspondant au terminal appelé ;
/b/ transmettre à destination du dispositif d'enregistrement, un message de déclenchement d'enregistrement indiquant ledit profil de communication d'appelant correspondant au terminal appelant ;
/c/ transmettre, à destination du terminal appelé, une requête d'établissement de communication indiquant un second profil de communication d'appelant correspondant audit dispositif d'enregistrement ;
/d/ recevoir depuis le terminal appelé une réponse d'établissement de communication indiquant un premier profil de communication d'appelé correspondant au terminal appelé ; et
/e/ transmettre, d'une part, à destination du dispositif d'enregistrement un message de mise à jour indiquant le premier profil de communication d'appelé, et, d'autre part, à destination du terminal appelant, un message de réponse indiquant un second profil de communication d'appelé correspondant audit dispositif d'enregistrement.

La communication établie comprend, d'une part, une première partie de communication entre le terminal appelant et le dispositif d'enregistrement, et, d'autre part, une seconde partie de communication entre le dispositif d'enregistrement et le terminal appelé.

En outre, le dispositif d'enregistrement mémorise des données de la communication reçues depuis le terminal appelant et/ou des données de la communication reçues depuis le terminal appelé.

On entend par les termes 'profil de communication d'appelant' et par les termes 'profil de communication d'appelé', les informations qui permettent, dans le réseau de télécommunications considéré, à la partie appelée de transmettre les données de la communication à la partie appelante, et les informations qui permettent à la partie appelante de transmettre les données de la communication à la partie appelée, respectivement.

Grâce à ces dispositions, on est en mesure d'enregistrer, au niveau du dispositif d'enregistrement, les communications d'un terminal déterminé, c'est-à-dire que l'on est en mesure de mémoriser les données de communication que reçoit ce terminal déterminé ou encore les données de communication que transmet ce terminal déterminé, dès le début de la communication et de manière transparente pour l'utilisateur de ce terminal.

En effet, le déclenchement d'un tel enregistrement est effectué en amont de l'établissement complet de la communication concernée, puisque le dispositif d'enregistrement est sollicité avant même que le serveur d'appels ait transmis le message d'établissement de communication à l'appelé.

Cette caractéristique contribue à la transparence de l'enregistrement de la communication pour l'utilisateur du terminal concerné. En effet, notamment dans le contexte d'une communication voix, un enregistrement selon des modes de réalisation de la présente invention est inaudible, puisqu'il est déclenché avant l'établissement de la communication.

D'autre part, cette caractéristique permet d'enregistrer une communication dans son intégralité, et comprenant de ce fait même le début de la communication.

En outre, aucune 'patte' du terminal concerné par l'enregistrement n'est utilisée pour un tel enregistrement. Ce terminal peut donc continuer de jouir des fonctionnalités qui lui sont offertes sur la base de sa seconde 'patte' pendant l'enregistrement de sa communication.

Le dispositif d'enregistrement reçoit à la fois le premier profil de communication d'appelant correspondant au terminal appelant et le premier profil de communication d'appelé correspondant au terminal appelé, puis le terminal appelant reçoit le profil de communication d'appelé correspondant au dispositif d'enregistrement et le terminal appelé reçoit le profil de communication d'appelant correspondant au dispositif d'enregistrement. Une communication ainsi établie se présente donc sous la forme d'une première partie correspondant à la liaison entre le terminal appelant et le dispositif d'enregistrement et d'une seconde partie correspondant à une liaison entre le dispositif d'enregistrement et le terminal appelé. Le dispositif d'enregistrement se situe donc entre le terminal appelant et le terminal appelé au regard de la communication en cours. II est donc en charge de recevoir et de transmettre les données échangées entre ces deux terminaux sur la base de la communication ainsi établie Il est alors en mesure de mémoriser ces données, sans avoir recours à une autre 'patte' du terminal concerné par l'enregistrement.

Dans un tel contexte, un terminal qui a deux 'pattes' est donc toujours apte à procéder à des transferts, des conférences ou autres fonctionnalités qui requièrent une seconde 'patte'.

Par ailleurs, que le terminal concerné par l'enregistrement corresponde au terminal appelant ou au terminal appelé, dès lors que ce terminal est impliqué dans une communication, on est en mesure de déclencher un enregistrement de cette communication. En effet, le déclenchement est effectué à la réception d'un message de requête d'établissement de communication dans lequel le terminal considéré est sollicité en tant que partie appelante ou appelée. Sur la base des indications contenues dans le message de requête d'établissement de communication, le serveur d'appels peut donc déterminer si la communication en cours d'établissement requiert un enregistrement ou non sur la base d'informations correspondantes, prévues à cet effet.

Par ailleurs, un tel procédé peut aisément être mis en oeuvre dans tout type de réseau de télécommunications et pour tout type de communications, telles que par exemple des communications de voix ou encore des communications de données. Grâce à de telles dispositions, on est en mesure d'enregistrer tout type de communication qui peut être géré dans le réseau de télécommunications considéré, dans l'intégralité de la communication.

Dans un mode de réalisation, lorsqu'un enregistrement de communication est requis pour une pluralité de terminaux du réseau de télécommunications qui sont gérés par un même serveur d'appels, le serveur d'appels gère une liste d'identifiants relatifs aux terminaux de cette pluralité de terminaux. Dans ce contexte, les étapes /b/ à /e/ sont mises en oeuvre seulement si le profil de communication d'appelant et/ou l'identifiant d'appelé correspondent à un identifiant de cette liste.

Lorsque le réseau de télécommunications est basé sur un protocole de type IP, un profil de communication peut comprendre au moins une adresse IP et un port IP de réception de données. Ainsi, le profil de communication d'appelant, respectivement d'appelé, indique l'adresse et le port IP sur lesquels le terminal appelant, respectivement le terminal appelé, reçoit les données de la communication.

Un profil de communication d'appelant, respectivement d'appelé, correspondant au dispositif d'enregistrement peut indiquer l'adresse IP et le port IP sur lesquels le dispositif d'enregistrement reçoit les données de la communication depuis l'appelé, respectivement depuis l'appelant.

On peut aussi prévoir des modes de réalisation dans lesquels le serveur d'appels est relié à une pluralité de dispositifs d'enregistrement. Dans ce contexte, le serveur d'appels peut gérer une liste de dispositifs d'enregistrement, et sélectionner un dispositif d'enregistrement parmi les dispositifs d'enregistrement de la liste en fonction, d'une part, d'informations indiquées dans le profil de communication de l'appelant et, d'autre part, d'informations relatives aux dispositifs d'enregistrement de la liste.

Ainsi, le serveur d'appels peut sélectionner un dispositif d'enregistrement sur la base du type de communication en cours d'établissement. En particulier, on peut prévoir un dispositif d'enregistrement adapté pour un enregistrement des communications de type voix et un dispositif d'enregistrement adapté pour les communications de type données.

On peut également prévoir de baser la sélection d'un dispositif d'enregistrement sur la base des charges respectives des différents dispositifs d'enregistrement de la liste gérée.

Aucune limitation n'est attachée quant aux critères d'une telle sélection et la présente invention couvre tout type de sélection d'un dispositif d'enregistrement parmi une liste.

Un deuxième aspect de l'invention propose un serveur d'appels adapté pour mettre en oeuvre un procédé d'enregistrement selon le premier aspect.

Un troisième aspect de la présente invention propose un dispositif d'enregistrement adapté pour mettre en oeuvre un procédé d'enregistrement selon le premier aspect.

Enfin, un quatrième aspect de la présente invention propose un système d'enregistrement comprenant un serveur d'appels selon le deuxième aspect et un dispositif d'enregistrement selon le troisième aspect.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation schématique d'un réseau de télécommunications selon un mode de réalisation de la présente invention ;
- la figure 2 illustre un échange de messages entre un terminal appelant, un terminal appelé et différentes entités de réseau selon un mode de réalisation de la présente invention, lorsque le terminal concerné par l'enregistrement est le terminal appelant ;
- la figure 3 illustre un échange de messages tel qu'illustré en figure 2 dans le contexte du protocole SIP ;
- la figure 4 illustre un autre échange de messages entre un terminal appelant, un terminal appelé et différentes entités de réseau selon un mode de réalisation de la présente invention, lorsque le terminal concerné par l'enregistrement est le terminal appelé ;
- la figure 5 illustre un échange de messages tel que celui illustré en figure 4 dans le contexte protocole SIP ; et
- la figure 6 illustre un serveur d'appels et un dispositif d'enregistrement selon un mode de réalisation de la présente invention.

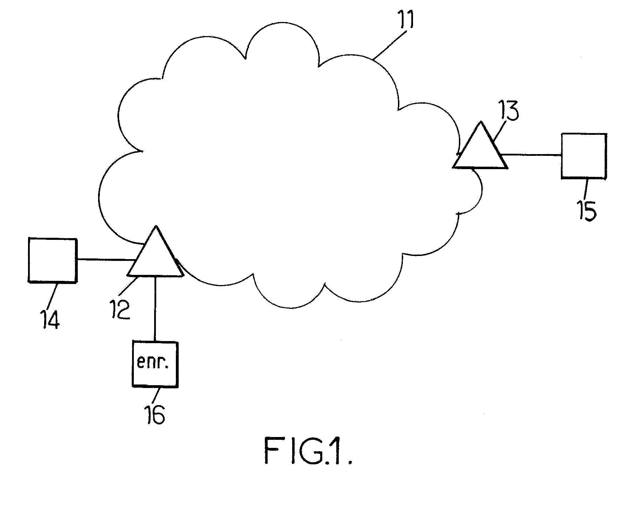

La figure 1 illustre un réseau de télécommunications 11 comprenant un premier serveur d'appels 12 en charge de la gestion des communications (ou appels) d'un terminal 14 et un second serveur d'appels 13 en charge de la gestion des communications d'un terminal 15. Le serveur d'appels 12 est en outre relié à un dispositif d'enregistrement 16.

Dans un mode de réalisation de la présente invention, le réseau de télécommunications 11 peut supporter un protocole de transmission par paquets de type IP.

Les terminaux appelant et appelé peuvent par exemple appartenir à ce même réseau de télécommunications sur IP.

Un mode de réalisation de la présente invention peut être aisément réalisé dans différents types de réseaux de télécommunications. En effet, aucune limitation n'est attachée au type de réseau de télécommunications dans lequel se trouvent le terminal appelant et/ou le terminal appelé. Ainsi, le réseau de télécommunications 11 peut comprendre différents types de réseaux interconnectés entre eux par des passerelles ad hoc.

Dans les sections suivantes, à titre d'exemple, la partie de la communication qui n'est pas concernée par l'enregistrement se trouve dans un réseau de télécommunications du même type que celui dans lequel se trouve la partie de la communication qui est concernée par l'enregistrement. Dans une variante, cette partie non concernée par l'enregistrement se trouve dans un réseau de télécommunications de type différent de la partie concernée par l'enregistrement, une partie de la communication se trouvant alors dans un réseau de type IP, et l'autre partie de la communication se trouvant dans un réseau de type TDM, pour 'Time Division Multiplexing'.

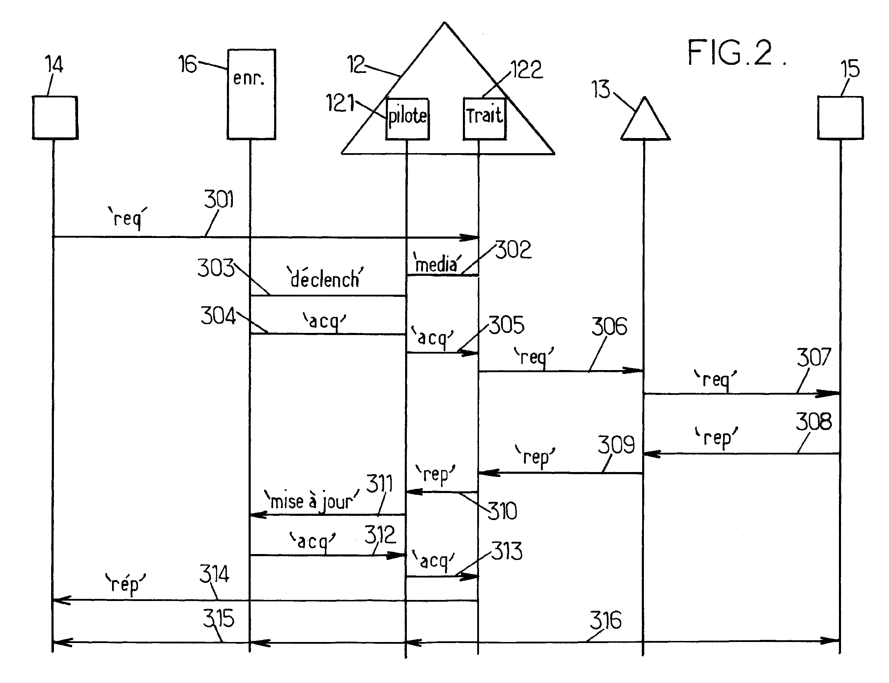

La figure 2 illustre un échange de messages entre un terminal appelant, un terminal appelé et différentes entités de réseau selon un mode de réalisation, lorsque le terminal concerné par l'enregistrement est le terminal appelant et lorsque le réseau est un réseau de type IP. Dans le réseau considéré ici, un serveur d'appels 12 gère un terminal 14 et un serveur d'appels 13 gère un terminal 15. Ainsi, on peut distinguer un premier type de protocoles permettant des échanges d'informations entre un serveur d'appels et un terminal, et un second type de protocole permettant des échanges d'informations entre deux serveurs d'appels. Le premier type de protocole peut être par exemple un protocole propriétaire et le second type de protocole peut par exemple être un protocole de type SIP ('Session Internet Protocol'), tel que défini par l'IETF ('Internet Engineering Task Force').

Au cours de cet échange de messages, un terminal 14 requiert un établissement de communication (i.e., d'appel) auprès du serveur d'appels qui est en charge de gérer les communications de ce terminal,. A cet effet, il émet un message de requête d'établissement d'appel 301 à destination du serveur d'appels 12. Ce message indique un profil de communication d'appelant correspondant au terminal 14. Un tel profil de communication indique des informations requises, selon le protocole d'établissement d'appel utilisé, pour établir une communication entre l'appelant et l'appelé. Ainsi, ces informations peuvent indiquer notamment l'adresse de réception du flux de données relatif à la communication considérée, au niveau de l'appelant.

Sur réception de ce message 301, le serveur d'appels 12 est alors en mesure d'émettre un message de déclenchement d'enregistrement 303 à destination du dispositif d'enregistrement 16. Ce message de déclenchement indique le profil de communication du terminal 14. II peut comprendre en outre une indication relative au type de média qui sera utilisé pour le flux de données de l'appel en cours d'établissement.

Sur réception de ce message de déclenchement, le dispositif d'enregistrement 16 peut préparer l'enregistrement à venir, notamment en mettant à jour certaines informations dans une base de données. Lorsqu'il est en mesure de prendre en charge cet enregistrement, il répond au serveur d'appels par la transmission d'un message d'acquittement 304.

Dans un mode de réalisation, le serveur d'appels 12 comprend un gestionnaire d'appel 122, adaptée pour la gestion d'appel, et une entité pilote de support 121, ou 'Media Driver'. Dans un tel contexte, le gestionnaire d'appel 122 sur réception d'une requête d'établissement d'appel 301 interroge le pilote 121, en émettant un message de choix de média 302, afin de déterminer le média à utiliser au cours de cet appel requis. En effet, on peut prévoir qu'un tel serveur d'appels peut gérer une pluralité de types d'appel, tels que par exemple un appel voix, ou un appel de données, chaque type pouvant correspondre à un média différent.

Dans ce contexte, le pilote 121 du serveur d'appels 12 est en charge de gérer l'interface avec le dispositif d'enregistrement 16. Ainsi, le pilote émet le message de déclenchement 303 qui indique le type de média qui sera utilisé pour l'appel en cours d'établissement, et réceptionne le message d'acquittement 304 depuis le dispositif d'enregistrement 16. Puis, le pilote 121 transmet ce message d'acquittement au gestionnaire d'appel 122 sous la forme d'un message d'acquittement 305.

A cette étape, le dispositif d'enregistrement 16 est prêt pour enregistrer une communication initiée par le terminal 14, c'est-à-dire que ce dispositif est prêt pour mémoriser des données échangées avec le terminal 14 au cours de l'appel qui est en cours d'établissement.

Puis, le serveur d'appels 12 procède à la transmission d'un message de requête d'appel à destination du terminal appelé, c'est à dire du terminal 15. A cet effet, le serveur d'appels 12 émet un message de requête d'appel 306 à destination d'un serveur d'appels 13 qui est en charge de gérer les appels impliquant le terminal 15, qui correspond à l'appelé. Ce message de requête d'établissement d'appel indique le profil de communication d'appelant correspondant au dispositif d'enregistrement 16. Un tel message peut être transmis selon un quelconque protocole correspondant à des échanges entre serveurs d'appels.

Le serveur d'appels 13, sur réception de ce message de requête d'établissement 306, émet un message de requête d'établissement d'appel 307 à destination du terminal 15 appelé selon le protocole utilisé entre le serveur d'appels 13 et les terminaux qu'il est en charge de gérer.

Le terminal 15 répond à cette requête par l'émission d'un message de réponse 308 à destination du serveur d'appels 13. Ce dernier émet alors un message de réponse 309 à destination du serveur d'appels 12.

II convient de noter que cet échange de messages entre le serveur d'appels 12, le serveur d'appels 13 et le terminal appelé 15, peut avantageusement rester sensiblement conforme à celui qui est mis en oeuvre lorsqu'un enregistrement de l'appel n'est pas requis, excepté le fait que le profil de communication d'appelant est modifié dans le message de requête d'établissement 306. En effet, ce profil de communication correspond ici au dispositif d'enregistrement.

Sur réception du message de réponse 309, le serveur d'appels 12 met à jour les informations stockées par le dispositif d'enregistrement 16 sur la base d'informations contenues dans le message de réponse 309 reçu depuis l'appelé 15, par l'émission d'un message de mise à jour 311. Le message de mise à jour indique le profil de communication d'appelé correspondant au terminal 15. Les informations contenues dans ce profil de communication correspondent notamment à l'adresse dans le réseau à laquelle le terminal 15 va recevoir les données envoyées par le terminal 14, lorsque l'appel sera établi. Le dispositif d'enregistrement 16 répond par un message d'acquittement 312 pour cette mise à jour.

On peut prévoir que dans certains cas, cette étape de mise à jour du dispositif d'enregistrement 16 peut ne pas être requise. En effet, lorsque le dispositif d'enregistrement connaît déjà les informations qui sont contenues dans le message de réponse 309, ce message de mise à jour est inutile. Cela peut être le cas lorsque le message de requête d'établissement émis par le terminal appelant indique déjà un profil de communication d'appelé correspondant au terminal 15.

En outre, le serveur d'appels 12 émet à destination du terminal 14 appelant, un message de réponse d'appel 314. Ce message de réponse d'appel 314 indique un profil de communication d'appelé correspondant au dispositif d'enregistrement 16. En procédant de cette manière, on indique au terminal appelant que, pour communiquer avec le terminal appelé, il doit utiliser le profil de communication d'appelé correspondant au dispositif d'enregistrement.

Dans un mode de réalisation de la présente invention, dans lequel le serveur d'appels comprend un pilote 121 et un gestionnaire d'appel 122, le gestionnaire d'appel reçoit le message de réponse 309 et émet alors un message de réponse 310 à destination du pilote 121. Le pilote est alors en charge d'émettre le message de mise à jour 311 tel que décrit ci-dessus, et de recevoir le message de réponse 312, tel que défini ci-dessus. Puis, le message de réponse 312 est reçu par le pilote 121 et transmis au gestionnaire d'appel 122 sous la forme d'un message 313.

Après réception du message 314 par le terminal appelant 14, l'appel requis est établi. Une première partie 315 de l'appel établi correspond aux échanges de données entre le terminal appelant 14 et le dispositif d'enregistrement 16; et une seconde partie 316 de l'appel correspond aux échanges de données entre le dispositif d'enregistrement et le terminal appelé 15.

En effet, d'une part, la partie appelée, c'est-à-dire le terminal 15, a reçu, via le message de requête d'établissement d'appel 307, le profil de communication du dispositif d'enregistrement 16, c'est à dire que le terminal 15 connaît une adresse dans le réseau à laquelle les données de la communication doivent être envoyées. Cette adresse correspond à l'adresse du dispositif d'enregistrement 16. D'autre part, la partie appelante, c'est-à-dire le terminal 14, a également reçu le profil de communication d'appelé correspondant au dispositif d'enregistrement 16. Ainsi, les données échangées entre les terminaux 14 et 15 transitent par le dispositif d'enregistrement 16 qui est alors en mesure de les mémoriser.

Le serveur d'appels 12 est donc en charge de modifier le profil de communication d'appelant dans le message de requête d'établissement 306 à destination de la partie appelée et le profil de communication d'appelé dans le message de réponse d'appel 314 à destination à la partie appelante.

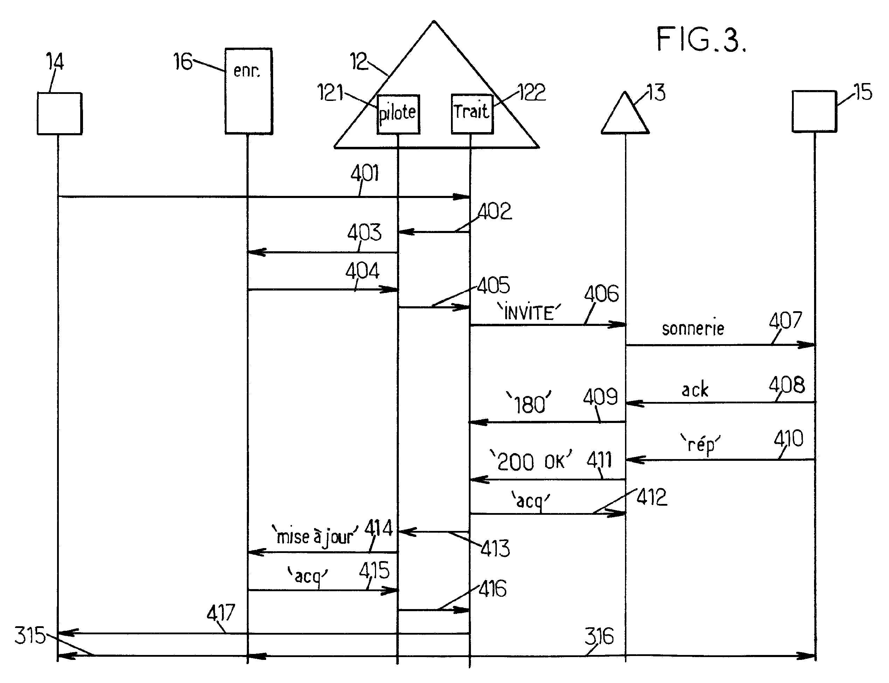

La figure 3 illustre un échange de messages tel que décrit ci-dessus en référence à la figure 2 dans le cas où le protocole SIP est utilisé pour échanger les informations d'appel entre les deux serveurs d'appel 12 et 13.

Dans ce contexte, les messages 401-405 correspondent aux messages 301-305, tels que précédemment décrits dans le contexte du serveur d'appels 12 comprenant un pilote 121 et un gestionnaire d'appel 122, en référence à la figure 3.

Puis, sur réception du message 405, équivalent au message 305 de la figure 2, le gestionnaire d'appel 122 du serveur d'appels 12 émet un message de requête d'établissement d'appel 406 'INVITE' selon le protocole SIP vers le serveur d'appels 13. Ce message de requête 406 indique un profil de communication d'appelant relativement au dispositif d'enregistrement 16. Ce profil de communication comprend une liste de SDP, pour 'Session Description Protocol', tel que défini par le document RFC 2327, pour 'Request For Comment', défini par l'IETF, pour `Internet Engineering Tak Force'. Un SDP indique notamment le type de média utilisé pour l'appel en cours d'établissement. Le média peut être par exemple de type audio ou encore de type vidéo. Un SDP peut encore indiquer le protocole utilisé pour le transport des données au cours de l'appel en cours d'établissement. Ce protocole peut être par exemple de type RTP/UDP/IP, ou encore de type H. 320 correspondant à une norme établie par l'ITU-T, pour 'International Telecommunication Union Telecom standardization'. Un SDP peut aussi indiquer un format du média indiqué ci-avant. Ainsi, par exemple, lorsque le média est de type vidéo, on peut indiquer un format de type H.261 vidéo ou encore de type MPEG, pour 'Moving Picture Experts Group'.

Un SDP indique aussi des adresses dans le réseau de télécommunications considéré, comme un identifiant d'un port IP/RTP de réception de données par le dispositif d'enregistrement 16.

Sur réception de ce message de requête d'établissement 406, le serveur d'appels 13 émet alors à destination du terminal 15 un message 407 correspondant au message 307 précédemment décrit. Dans le contexte d'un appel de type voix par exemple, la réception de ce dernier message par le terminal 15 peut correspondre à une étape de sonnerie de ce terminal 15.

Puis, le terminal 15 répond à ce message 407 par un message d'acquittement de sonnerie 408 à destination du serveur d'appels 13. Sur réception de ce message d'acquittement 408, le serveur d'appels 13 émet à destination du serveur d'appels 12, un message 409 d'acquittement '180' selon le protocole SIP.

Lorsque le terminal appelé 15 répond à l'appel ainsi initié, un message de réponse 410 est émis depuis ce terminal 15 à destination du serveur d'appels 13. Sur réception de ce message 410, le serveur d'appels 13 émet à destination du serveur d'appels 12, un message 411 selon le protocole SIP indiquant que l'appel est répondu, ce message correspond à un message '200 OK'. Ce message indique le profil de communication d'appelé du terminal 15. II comprend à cet effet un SDP relatif au terminal 15. Le SDP du terminal 15 est défini sur la base de la liste des SDP reçus dans le message de requête d'établissement 406 relatifs au dispositif d'enregistrement 16.

Le serveur d'appels 12 répond à ce message 411 en émettant un message 412 d'acquittement à destination du serveur d'appels 13 qui correspond à un message 'Ack' selon le protocole SIP.

Puis, les messages 413-417 correspondent respectivement aux messages 310 à 314 tels que décrits ci-avant.

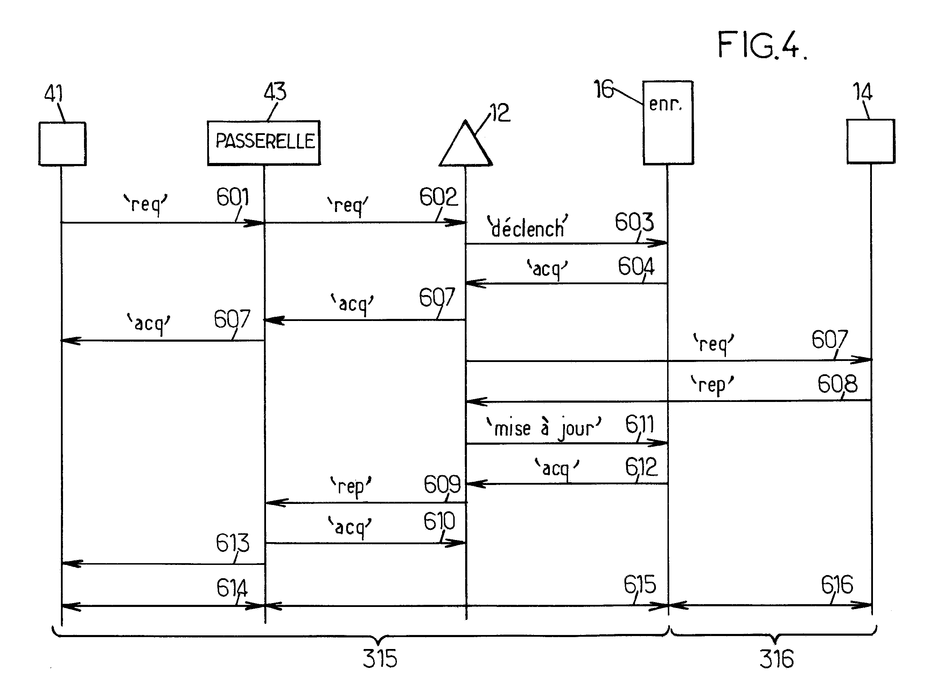

La figure 4 illustre un autre échange de messages entre un terminal appelant, un terminal appelé et différentes entités de réseau selon un mode de réalisation de la présente invention, lorsque le terminal concerné est le terminal appelé et lorsque le terminal appelant et le terminal appelé sont dans des réseaux de télécommunications respectifs de types différents.

Dan ce contexte, le terminal appelant correspondant à un terminal analogique 41. II est situé dans un réseau de type analogique. II est géré par un serveur d'appels passerelle 43 qui est adapté pour interconnecter le réseau analogique à un réseau de type IP. Le terminal appelé correspond au terminal de type IP 14. Il est situé dans un réseau de type IP. Les appels de ce terminal 14 sont gérés par le serveur d'appels 12, qui est relié au dispositif d'enregistrement 16.

Le terminal analogique 41 initie un appel vers le terminal IP 14. Dans une telle architecture de réseau, le terminal analogique émet un message de requête d'établissement d'appel 601 à destination du serveur d'appels passerelle 43. Ce serveur d'appels passerelle 43 transmet cette requête d'établissement d'appel au serveur d'appels 12 sous la forme d'un message de requête d'établissement 602.

Sur réception de ce message 602, le serveur d'appels 12 émet un message de déclenchement d'enregistrement 603 à destination du dispositif d'enregistrement 16. Sur réception de ce message, comme cela est décrit en référence aux figures 2 et 3, le dispositif d'enregistrement 16 prépare sa configuration pour un enregistrement de flux de données destiné au terminal 14 et/ou provenant du terminal 14. Ce message de déclenchement comprend un profil de communication d'appelant correspondant au terminal 41.

Puis, le dispositif d'enregistrement 16 répond au serveur d'appels 12 par la transmission d'un message d'acquittement 604.

A ce stade, le serveur d'appels 12 peut d'une part répondre au message de requête d'établissement d'appel 602 et d'autre part transmettre une requête d'établissement d'appel au terminal 14.

A cet effet, il émet un message d'acquittement 605 au serveur d'appels passerelle 43. Ce dernier transmet ce message 605 au terminal analogique 41 sous la forme d'un message 606 selon le protocole utilisé entre ce serveur d'appels passerelle et les terminaux analogiques qu'il gère.

Le serveur d'appels 12 transmet également la requête d'établissement d'appel 602 au terminal 14 sous la forme d'un message de requête d'établissement d'appel 607 selon le protocole utilisé entre ce serveur d'appels 12 et les terminaux qu'il gère.
Lorsque l'appel initié est répondu au niveau du terminal 14, ce dernier émet un message de réponse 608 à destination du serveur d'appels 12. Le serveur d'appels 12 émet alors à destination du dispositif d'enregistrement 16 un message de mise à jour 611 indiquant le profil de communication d'appelé correspondant au terminal 14.

Le dispositif d'enregistrement 16 répond à ce message sous la forme d'un message d'acquittement 612 à destination du serveur d'appels 12, ce message indiquant que le dispositif d'enregistrement est prêt pour l'enregistrement de la communication à venir entre le terminal appelant 41 et le terminal appelé 14.

Puis, le serveur d'appels 12 transmet le message de réponse 608 sous la forme d'un message 609, selon le protocole utilisé entre le serveur d'appels 12 et le serveur passerelle 43, à destination du serveur passerelle 43.

Le serveur d'appels passerelle 43 d'une part transfère le message de réponse 609 au terminal analogique 41 sous la forme d'un message 613 selon le protocole utilisé entre eux, et d'autre part, répond au serveur d'appels 12 sous la forme d'un message d'acquittement 610.

L'appel requis est alors établi de sorte qu'un flux de données transmis entre les terminaux 41 et 14 transite par le dispositif d'enregistrement pour y être enregistré selon un mode de réalisation de la présente invention.

Sur une première partie 614 de l'appel établi, les données sont transmises selon un protocole de type PCM (pour 'Pulse C M') entre le terminal appelant 41 et le serveur d'appels passerelle 43. Puis, sur une deuxième partie de l'appel 615, les données sont transmises selon un protocole de type IP RTP (pour 'Internet Protocol Real Time Protocol') entre le serveur d'appels passerelle et le dispositif d'enregistrement 16. Enfin, sur une troisième partie 616 de l'appel les données sont transmises selon un protocole également de type IP RTP entre le dispositif d'enregistrement 16 et le terminal appelé 14.

L'appel est, comme cela est précédemment décrit, établi selon une première partie 315 entre l'appelant 41 et le dispositif d'enregistrement 16 et une seconde partie entre le dispositif d'enregistrement 16 et l'appelé 14.

En effet, le terminal 41 dispose d'un profil de communication d'appelé qui correspond au dispositif d'enregistrement 16. Par conséquent, toutes les données émises au cours de cet appel établi transitent par ce dispositif d'enregistrement. Puis, le terminal 14 dispose d'un profil de communication d'appelant qui correspond au dispositif d'enregistrement, ainsi toutes les données émises au cours de cet appel par ce terminal 14 transitent aussi par le dispositif d'enregistrement 16.

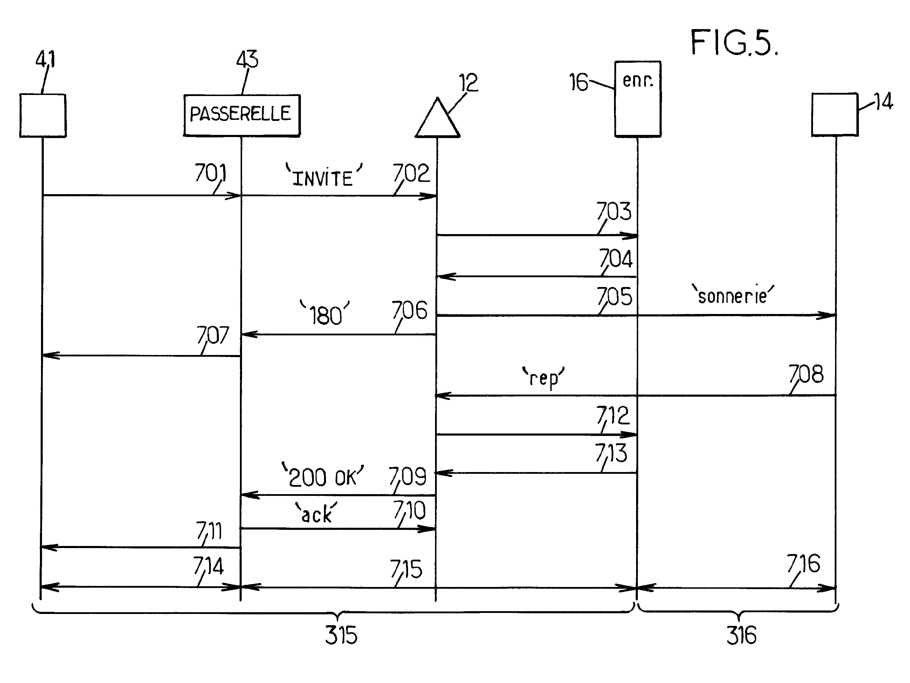

La figure 5 détaille un échange de messages entre le serveur d'appels passerelle 43 et le serveur d'appels 12 selon un protocole de type SIP, dans le contexte décrit ci-dessus en référence à la figure 4.

Sur réception d'un message de requête d'établissement d'appel 701, le serveur d'appels passerelle 43 émet à destination du serveur d'appels 12 un message 702 'INVITE' indiquant un profil de communication d'appelant correspondant au terminal 41. Un tel message peut ainsi indiquer une liste de SDP relativement au terminal 41, comme cela est décrit ci-avant. Puis, un message de déclenchement d'enregistrement 703 est émis à destination du dispositif d'enregistrement 16.

Comme en référence à la figure 4, le dispositif d'enregistrement 16 se prépare à l'enregistrement considéré et répond par un message d'acquittement 704. Le serveur d'appels 12 peut alors d'une part émettre un message de requête d'établissement d'appel 705 vers le terminal 14, et d'autre part, transmettre à destination du serveur d'appels passerelle 43 un message 706 d'acquittement '180' selon le protocole SIP. Ce dernier message est transmis au terminal 41 sous la forme d'un message 707.

Puis, le terminal appelé 14 répond à l'appel en cours, et un message de réponse 708 est émis depuis ce terminal vers le serveur d'appels 12.

Le serveur d'appels 12 émet alors vers le dispositif d'enregistrement 16 un message de mise à jour 712 qui indique le profil de communication d'appelé relatif au terminal appelé 14. Le dispositif d'enregistrement 16 accuse bonne réception de ce message de mise à jour par l'émission d'un message d'acquittement 713 vers le serveur d'appels 12.

Ce dernier transmet ensuite le message de réponse 708 sous la forme d'un message 709 '200 OK' selon le protocole SIP à destination du serveur d'appels passerelle 43. Ce dernier message indique un SDP relatif au dispositif d'enregistrement 16.

Le serveur d'appels passerelle 43 émet alors à destination du serveur d'appels 12 un message d'acquittement 'Ack' 710 selon le protocole SIP.

A ce stade, l'appel requis est établi, comme cela est précédemment décrit en référence à la figure 4.

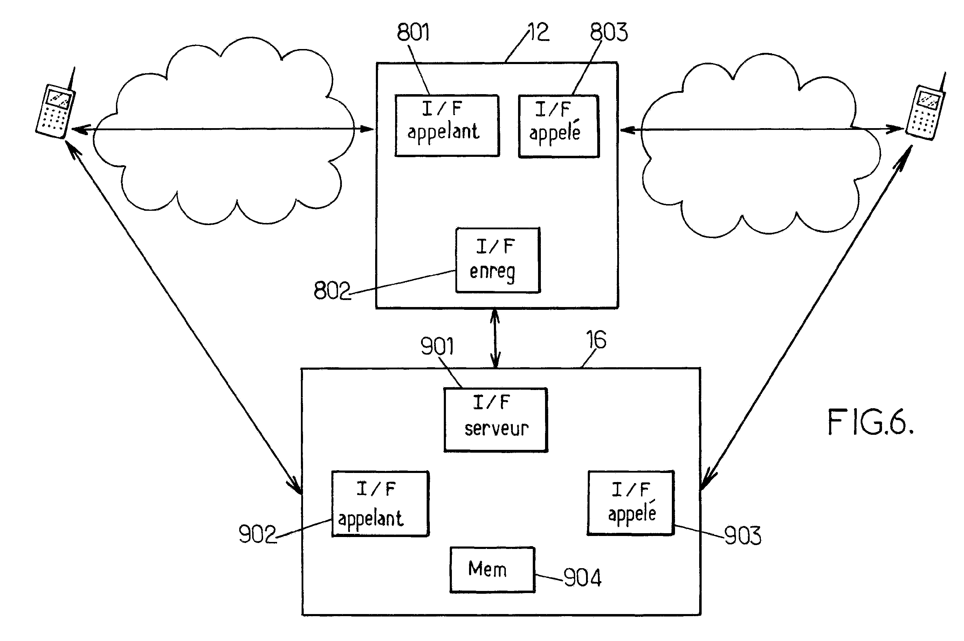

La figure 6 illustre un serveur d'appels selon un mode de réalisation de la présente invention. Le serveur d'appels 12 est adapté pour enregistrer une communication entre un terminal appelant et un terminal appelé dans un réseau de télécommunications.

Ce serveur d'appels est relié à au moins un dispositif d'enregistrement 16 et gère un terminal déterminé 14 correspondant soit au terminal appelant soit au terminal appelé.

Ce serveur d'appels comprend une première unité d'interface 802 avec le dispositif d'enregistrement adaptée pour, d'une part, transmettre, sur réception d'une requête d'établissement d'appel, ou de communication, au dispositif d'enregistrement un message de déclenchement d'enregistrement 303, 603 indiquant le premier profil de communication d'appelant, c'est-à-dire celui qui correspond au terminal appelant; et, d'autre part, transmettre un message de mise à jour 311 ou 611 indiquant le premier profil de communication d'appelé, c'est-à-dire celui qui correspond au terminal appelé.

II comprend en outre une deuxième unité d'interface 801 avec le terminal appelant adaptée pour, d'une part, recevoir une requête d'établissement d'appel, ou de communication 301, indiquant le premier profil de communication d'appelant correspondant au terminal appelant et un identifiant d'appelé correspondant au terminal appelé ; et, d'autre part, transmettre un message de réponse de communication 314 ou 609 indiquant un second profil de communication d'appelé correspondant au dispositif d'enregistrement.

Il comprend également une troisième unité d'interface 803 avec le terminal appelé adaptée pour, d'une part, transmettre à destination du terminal appelé, une requête d'établissement d'appel 306, 607 indiquant un second profil de communication d'appelant correspondant audit dispositif d'enregistrement ; et, d'autre part, recevoir depuis le terminal appelé une réponse d'établissement d'appel 309, 608 indiquant le premier profil de communication d'appelé correspondant au terminal appelé.

Le serveur d'appels est donc adapté pour établir un appel, d'une part, selon une première partie d'appel entre le terminal appelant et le dispositif d'enregistrement, et, d'autre part, selon une seconde partie d'appel entre le dispositif d'enregistrement et le terminal appelé.

Le serveur d'appels 12 peut comprendre en outre une unité de gestion 804 adaptée pour gérer une liste d'identifiants relatifs respectivement à une pluralité de terminaux gérés par ce serveur d'appels, pour déterminer si le profil de communication d'appelant et/ou l'identifiant d'appelé indiqué dans une requête d'établissement d'appel reçue par la deuxième unité d'interface 801, correspond à un identifiant de la liste ; et pour décider si un enregistrement de l'appel en cours d'établissement est requis.

Le serveur d'appels peut être relié à une pluralité de dispositifs d'enregistrement 16. Dans ce contexte, il peut comprendre en outre une unité de sélection de dispositif d'enregistrement adaptée pour sélectionner un dispositif d'enregistrement parmi la pluralité de dispositifs d'enregistrement en fonction d'une part d'informations indiquées dans le profil de communication de l'appelant et d'autre part d'informations relatives aux dispositifs d'enregistrement de la pluralité.

La figure 6 illustre également un dispositif d'enregistrement selon un mode de réalisation de la présente invention. Ce dispositif d'enregistrement 16 de communication relié à un serveur d'appels 12 tel que décrit précédemment.

Ce dispositif d'enregistrement comprend une première unité d'interface 901 avec le serveur d'appels adaptée pour, d'une part, recevoir un message de déclenchement d'enregistrement 303 ou 603 indiquant un profil de communication d'appelant correspondant au terminal appelant ; et d'autre part, recevoir un message de mise à jour 311 ou 611 indiquant un profil de communication d'appelé correspondant au terminal appelé.

II comprend en outre une mémoire 904 adaptée pour enregistrer des informations échangées entre le terminal appelant et le terminal appelé. II comprend également une deuxième unité d'interface 902 adaptée pour, d'une part, recevoir et mémoriser dans la mémoire les informations émises par le terminal appelant, et d'autre part, transmettre au terminal appelant les informations reçues par une troisième unité d'interface . II comprend aussi la troisième unité d'interface 903 adaptée pour, d'une part, recevoir et mémoriser dans la mémoire les informations émises par le terminal appelé, et d'autre part, transmettre au terminal appelé les informations reçues par la deuxième unité d'interface.

## Revendications

1. Procédé d'enregistrement de communication pour un terminal déterminé (14), au cours d'une communication entre un terminal appelant et un terminal appelé dans un réseau de télécommunications (11),
ledit terminal déterminé, correspondant au terminal appelant ou au terminal appelé, étant géré par un serveur d'appels (12),
le serveur d'appels étant relié à au moins un dispositif d'enregistrement (16) ;
ledit procédé comprenant les étapes suivantes, mises en oeuvre au niveau du serveur d'appels :
/a/ recevoir une requête (301, 602) d'établissement de communication indiquant un premier profil de communication d'appelant correspondant au terminal appelant et un identifiant d'appelé correspondant au terminal appelé ;
/b/ transmettre à destination du dispositif d'enregistrement, un message de déclenchement d'enregistrement (303, 603) indiquant ledit profil de communication d'appelant correspondant au terminal appelant ;
/c/ transmettre à destination du terminal appelé, une requête d'établissement de communication (306, 607) indiquant un second profil de communication d'appelant correspondant audit dispositif d'enregistrement ;
/d/ recevoir depuis le terminal appelé une réponse d'établissement de communication (309, 608) indiquant un premier profil de communication d'appelé correspondant au terminal appelé ;
/e/ transmettre, d'une part, à destination du dispositif d'enregistrement un message de mise à jour (311, 611) indiquant le premier profil de communication d'appelé correspondant au terminal appelé, et, d'autre part, transmettre à destination du terminal appelant, un message de réponse de communication (314, 609) indiquant un second profil de communication d'appelé correspondant audit dispositif d'enregistrement ;
dans lequel la communication est établie, d'une part, selon une première partie de communication entre le terminal appelant et le dispositif d'enregistrement, et, d'autre part, selon une seconde partie de communication entre le dispositif d'enregistrement et le terminal appelé, et
dans lequel le dispositif d'enregistrement mémorise des données de la communication reçues depuis le terminal appelant et/ou des données de la communication reçues depuis le terminal appelé.

2. Procédé d'enregistrement selon la revendication 1, dans lequel, lorsqu'un enregistrement est requis pour une pluralité de terminaux du réseau de télécommunications qui sont gérés par le serveur d'appels (12), le serveur d'appels gère une liste d'identifiants relatifs aux terminaux de ladite pluralité de terminaux, et dans lequel les étapes /b/ à /e/ sont mises en oeuvre seulement si le profil de communication d'appelant et/ou l'identifiant d'appelé correspond à un identifiant de ladite liste.

3. Procédé d'enregistrement selon la revendication 1 ou 2, dans lequel, lorsque le réseau de télécommunications est basé sur un protocole de type IP, pour 'Internet Protocol', un profil de communication comprend au moins une adresse IP et un port IP de réception de données.

4. Procédé d'enregistrement selon l'une quelconque des revendications précédentes, dans lequel le serveur d'appels (12) gère une liste de dispositifs d'enregistrement, et dans lequel le serveur d'appels sélectionne un dispositif d'enregistrement parmi lesdits dispositifs d'enregistrement de ladite liste en fonction d'une part d'informations indiquées dans le profil de communication de l'appelant et d'autre part d'informations relatives aux dispositifs d'enregistrement de ladite liste.

5. Serveur d'appels (12) adapté pour enregistrer une communication entre un terminal appelant et un terminal appelé dans un réseau de télécommunications,
ledit serveur d'appels étant relié à au moins un dispositif d'enregistrement (16) et gérant un terminal déterminé (14) correspondant au terminal appelant ou au terminal appelé ;
ledit serveur d'appels comprenant :
- une première unité d'interface (802) avec le dispositif d'enregistrement adaptée pour :
- transmettre, sur réception d'une requête d'établissement de communication, au dispositif d'enregistrement un message de déclenchement d'enregistrement (303, 603) indiquant un premier profil de communication d'appelant correspondant au terminal appelant ; et
- transmettre au dispositif d'enregistrement un message de mise à jour (311, 611) indiquant un premier profil de communication d'appelé correspondant au terminal appelé ;
- une deuxième unité d'interface (801) avec le terminal appelant adaptée pour :
- recevoir depuis le terminal appelant une requête d'établissement de communication (301) indiquant le premier profil de communication d'appelant et un identifiant d'appelé correspondant au terminal appelé ; et
- transmettre à destination du terminal appelant un message de réponse de communication (314, 609) indiquant un second profil de communication d'appelé correspondant audit dispositif d'enregistrement ;
- une troisième unité d'interface (803) avec le terminal appelé adaptée pour :
- transmettre à destination du terminal appelé, une requête d'établissement de communication (306, 607) indiquant un second profil de communication d'appelant correspondant audit dispositif d'enregistrement ; et
- recevoir depuis le terminal appelé une réponse d'établissement de communication (309, 608) indiquant le premier profil de communication d'appelé;
ledit serveur d'appels étant adapté pour établir une communication, d'une part, selon une première partie de communication entre le terminal appelant
et le dispositif d'enregistrement, et, d'autre part, selon une seconde partie de communication entre le dispositif d'enregistrement et le terminal appelé.

6. Serveur d'appels (12) selon la revendication 5, comprenant en outre, une unité de gestion (804) adaptée pour :
- gérer une liste d'identifiants relatifs respectivement à une pluralité de terminaux gérés par ledit serveur d'appels ;
- déterminer si le premier profil de communication d'appelant et/ou l'identifiant d'appelé indiqué dans une requête d'établissement de communication reçue par la deuxième unité d'interface, correspond à un identifiant de ladite liste ; et
- décider si un enregistrement de l'appel en cours d'établissement est requis.

7. Serveur d'appels selon la revendication 5 ou 6, relié à une pluralité de dispositifs d'enregistrement (16), comprenant en outre une unité de sélection de dispositif d'enregistrement adaptée pour sélectionner un dispositif d'enregistrement parmi la pluralité de dispositifs d'enregistrement en fonction d'une part d'informations indiquées dans le premier profil de communication de l'appelant et d'autre part d'informations relatives aux dispositifs d'enregistrement de la pluralité.

8. Dispositif d'enregistrement (16) de communication relié à un serveur d'appels (12) adapté pour enregistrer une communication relative à un terminal déterminé (14), au cours d'une communication entre un terminal appelant et un terminal appelé dans un réseau de télécommunications (11), ledit terminal déterminé, correspondant au terminal appelant ou au terminal appelé, étant géré par le serveur d'appels (12), ledit dispositif d'enregistrement comprenant :
- une première unité d'interface (901) avec le serveur d'appels adaptée pour :
- recevoir un message de déclenchement d'enregistrement (303, 603) indiquant un premier profil de communication d'appelant correspondant au terminal appelant ; et
- recevoir un message de mise à jour (311, 611) indiquant un premier profil de communication d'appelé correspondant au terminal appelé ; et
- une mémoire (904) adaptée pour enregistrer des informations échangées entre le terminal appelant et le terminal appelé ;
- une deuxième unité d'interface (902) adaptée pour, d'une part, recevoir et mémoriser dans ladite mémoire les informations émises par le terminal appelant, et d'autre part, transmettre au terminal appelant les informations reçues par une troisième unité d'interface ; et
- ladite troisième unité d'interface (903) adaptée pour, d'une part, recevoir et mémoriser dans ladite mémoire les informations émises par le terminal appelé, et d'autre part, transmettre au terminal appelé les informations reçues par ladite deuxième unité d'interface.

9. Système d'enregistrement de communication entre un terminal appelant et un terminal appelé dans un réseau de télécommunications comprenant d'une part un serveur d'appels (12) selon l'une quelconque des revendications 5 à 7 et d'autre part un dispositif d'enregistrement (16) selon la revendication 8.
